# FASCICULE DE BREVET EUROPEEN

(11) **EP 2 057 878 B1**
(45) Date de publication et mention de la délivrance du brevet: **29.06.2011**
(21) Numéro de dépôt: 08305771.1
(22) Date de dépôt: 04.11.2008
(51) Int. Cl.: A01D 34/73, A01D 34/66

(54) **Palier pour disque de coupe d'un lamier**
Lager für Schneidscheibe einer Mähmaschine
Bearing for cutting disk of a mower

(30) Priorité: 06.11.2007 FR 0758819
(43) Date de publication de la demande: 13.05.2009
(73) Titulaire: Coup'Eco, 17800 Pons (FR)
(72) Inventeur: Boulard, Thierry, 17250 Sainte Gemme (FR)
(74) Mandataire: Fantin, Laurent

(56) Documents cités:
- BE-A- 484 527
- FR-A- 2 521 389
- GB-A- 2 187 925
- US-A- 4 936 884
- US-A1- 2004 006 962

## Description

La présente invention concerne un caisson de lamier.

On connaît les dispositifs d'élagage de la végétation utilisés tant pour la taille des bords de route que pour la taille de haies ou la taille arboricole.

Les lamiers comprennent un caisson rapporté sur un bras de manoeuvre d'un véhicule tel qu'un engin polyvalent de chantier, un tracteur ou une pelle mécanique pour les chantiers.

Ce caisson comporte de façon connue une motorisation et des moyens de coupe, entraînés en rotation par ladite motorisation.

Ces moyens de coupe se trouvent sous forme de disques de scie ou de disques équipés de couteaux suivant les besoins.

Les disques de scie comprennent des disques munis de dents sur la périphérie.

Les disques équipés de couteaux portent chacun au moins deux couteaux montés pivotant chacun autour d'un axe, les axes étant disposés sur la partie périphérie du disque. En fonctionnement, sous l'effet de la force centrifuge, les couteaux s'orientent suivant une direction radiale. Chaque couteau dispose d'une géométrie particulière en fonction des besoins de coupe.

On appellera pour la suite de la description, disque de coupe, indifféremment les disques de scie à dents périphériques et les disques équipés de couteaux.

La motorisation est généralement du type moteur hydraulique et il est prévu une transmission par courroies/poulies pour entraîner chaque disque avec le sens de rotation adapté.

Il est important de noter que chaque disque est solidaire d'un palier qui est un élément essentiel d'un lamier ainsi que cela va être explicité ci-après.

Dans les lamiers, et comme présenté dans la demande de brevet FR-2.521.389, les disques sont à recouvrement ce qui impose un décalage alternatif en hauteur avec un espace aussi réduit que possible mais néanmoins suffisant pour tenir compte des oscillations du disque lors du travail et de ses déformations.

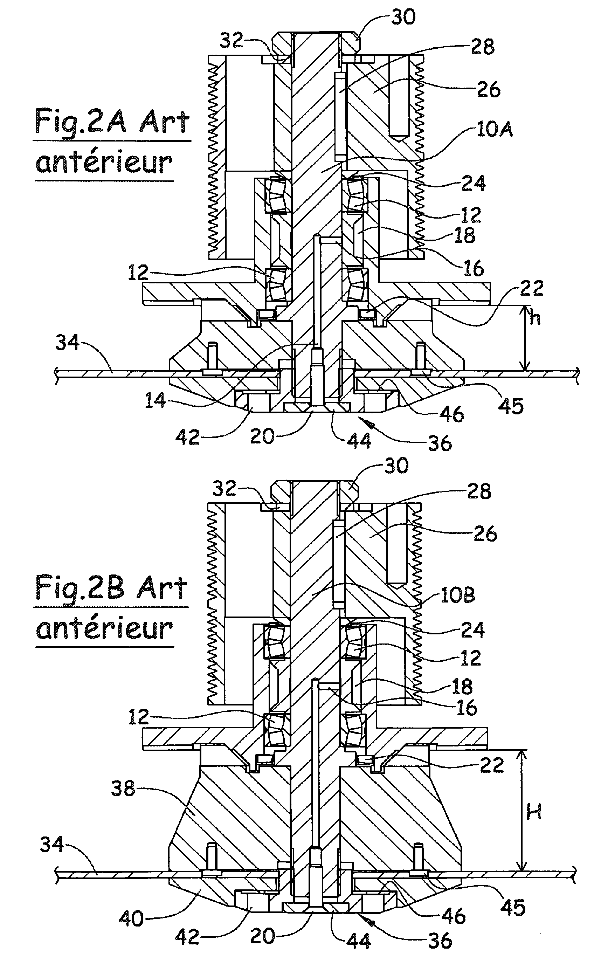

Les paliers tels qu'ils sont actuellement agencés ne répondent pas à l'ensemble des problèmes posés par le travail et à l'ensemble des besoins des utilisateurs. On se reporte aux figures 2A et 2B qui montrent un palier de l'art antérieur pour mettre en exergue les problèmes posés et les besoins des utilisateurs.

Un palier de l'art antérieur comprend un arbre 10A et 10B, suivant qu'il s'agit d'un arbre court ou d'un arbre long de façon à porter un disque et à assurer l'écart nécessaire entre deux disques juxtaposés sur le caisson du lamier. Un caisson de lamier peut comporter de deux à quatre ou cinq disques de coupe.

On comprend donc que chaque palier dispose d'une longueur d'arbre donnée et déterminée suivant sa position. Par exemple si le premier arbre est un arbre court, le suivant un long, le troisième un court et le quatrième un long, il est impossible d'inverser la séquence pour avoir un arbre long, un deuxième court un troisième long et un quatrième court. La seule solution est un démontage complet du lamier et de ses paliers, ce qui n'est pas à la portée de tout utilisateur d'une part et qui requiert beaucoup de temps d'autre part.

Or suivant les besoins certains utilisateurs préfèrent un ordre ou un autre. De plus, pour certaines activités il peut être judicieux ou nécessaire de panacher les types de disques du type à dents ou à couteaux et donc de disposer d'un ordre ou d'un autre des paliers suivant qu'ils portent l'un ou l'autre disques, Chaque arbre 10A et 10B est monté sur des roulements 12, au de deux, généralement à rouleaux inclinés pour une reprise des efforts axiaux et radiaux en plus de permettre la rotation.

Ces roulements sont soumis à des contraintes de travail importantes et doivent être lubrifiés régulièrement, ceci de façon connue.

A cet effet, il est prévu un canal axial 14 et une sortie transversale 16 entre les deux roulements de façon à alimenter par l'intérieur une chambre 18 de réserve de graisse. Une vis 20 obture le canal axial 14.

Un joint à lèvre 22 et un joint en tôle 24 assurent l'étanchéité en partie basse et haute des roulements.

Ce joint en tôle pose problème car en cas d'injection de graisse trop importante, la graisse peut fuir au-delà dudit joint, car il n'est prévu aucune évacuation du lubrifiant excédentaire.

Les arbres 10 portent chacun une poulie 26 apte à recevoir des courroies. Dans l'agencement de l'art antérieur, chaque poulie 26 est immobilisée en rotation par rapport à l'arbre qui la reçoit au moyen d'un ensemble 28 rainure/clavette.

La poulie est immobilisée en translation sur l'arbre par un écrou 30 et une rondelle 32 qui réalisent également le serrage du roulement 12 sur l'arbre 10A ou 10B.

Le disque 34 de coupe est immobilisé sur l'arbre par des moyens 36 de fixation et par l'arbre lui-même qui comprend des méplats.

Ces moyens 36 de fixation comprennent un contre flasque 38, un flasque 40 et un écrou 42 de serrage et une rondelle 44 de sécurité.

Le contre flasque 38 assure l'espacement en fonction de la longueur de l'arbre.

Il est monté coaxial sur l'arbre et comporte aussi deux méplats pour assurer la solidarité en rotation avec l'arbre qui le porte.

Des pions 45 en saillie de ce contre flasque assurent une anti-rotation du disque qui est muni de deux trous prévus pour coopérer avec lesdits pions. Le disque comporte aussi un trou central de centrage sur la contre flasque.

Le flasque 40 vient plaquer le disque sur le contre flasque 38 et présente aussi deux logements pour recevoir la partie en saillie des pions débouchant des trous des disques.

Ainsi les trois éléments contre flasque, disque et flasque sont intimement liés en rotation.

L'écrou 42 de serrage se visse sur l'extrémité de l'arbre et transmet le couple de serrage axial aux trois pièces qui sont en butée sur un épaulement ménagé sur l'arbre.

Afin de faciliter le démontage, une rondelle 46 annulaire, par exemple en matériau à faible coefficient de friction, est intercalée entre l'écrou et le flasque, plus exactement dans un usinage réalisé sous la face de l'écrou.

Cette rondelle annulaire est centrée sur l'extérieur du logement.

La rondelle 44 de sécurité assure une friction sur l'écrou 42 de serrage afin d'éviter son démontage. Cette rondelle est maintenue en place par la vis 20 dont le pas est différent de celui de l'écrou 42 et fait ainsi office de contre écrou.

On constate dans la pratique que la rondelle 44 de sécurité est souvent omise ainsi que le montage de la vis 20. Ceci a pour conséquence une importante diminution de la sécurité, la pénétration de particules dans le canal de lubrification, ce qui peut l'obturer et limiter la pénétration de graisse lors des opérations de maintenance sans compter la pénétration de particules dans les cages de roulements diminuant la durée de vie.

De plus, le disque n'est pas toujours positionné avec les trous en coïncidence et un emboîtement parfait du contre flasque sur l'arbre si bien que l'écrou de serrage est serré alors que le positionnement n'est pas adapté. De fait, au cours du fonctionnement le disque se met en place et l'écrou de serrage n'exerce plus aucun effort de serrage, conduisant à un palier dangereux en utilisation.

De même, la rondelle 46 à faible coefficient de friction est souvent mal positionée, le centrage annulaire nécessitant des précautions de placement, engendrant alors un serrage d'une efficacité insuffisante.

On constate aussi que dans l'art antérieur, les contre flasque et flasque ont exactement les mêmes diamètres. Les disques ne travaillent pas toujours dans le plan de coupe et sont soumis à des phénomènes vibratoires et à des oscillations, notamment en cas de rupture de certaines dents, provoquant un déséquilibre. Ces vibrations conduisent dans certains cas à des cisaillements au droit des contre flasque et flasque. Or, ceux-ci étant de mêmes diamètres, la partie annulaire du disque ainsi découpée par cisaillement peut être éjectée du palier qui supportait le disque.

Le caisson de lamier selon la présente invention tel que revendiqué dans la revendication 1 vise à apporter des solutions à ces problèmes. La description qui va suivre illustre un mode de réalisation optimisé d'un palier, les différents dessins annexés représentant :
- figure 1 : une vue d'un lamier comprenant quatre paliers support de disque,
- figures 2A et 2B : deux vues respectivement d'un palier à arbre court et à arbre long de l'art antérieur,
- figure 3 : une vue d'un palier à arbre de longueur unique pour disque de coupe d'un caisson de lamier selon la présente invention dans sa configuration petite longueur, et
- figure 4 : une vue d'un palier à arbre de longueur unique selon la figure 3 dans sa version grande longueur

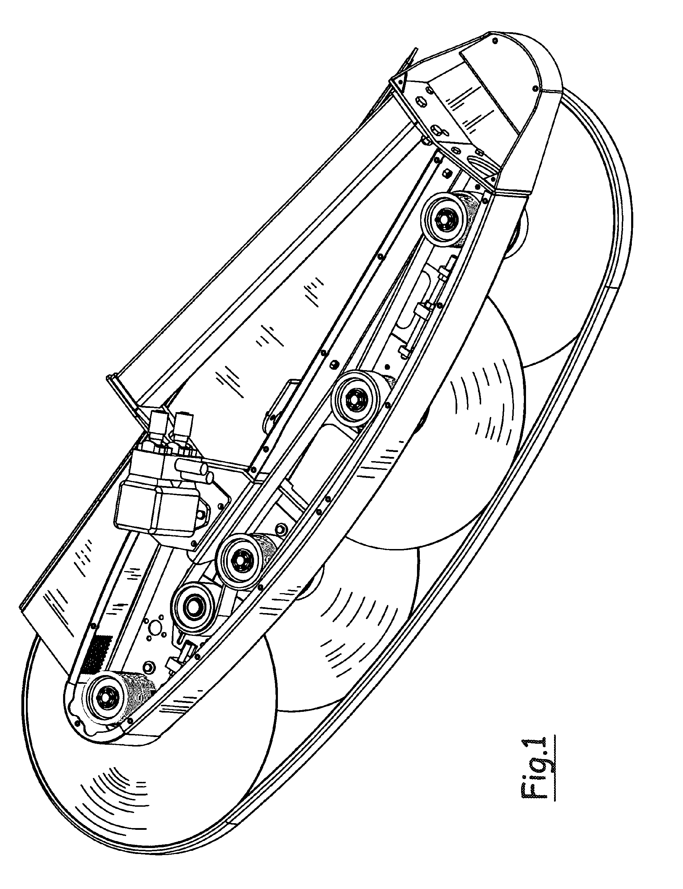

Sur la figure 1, le lamier présenté porte plusieurs paliers selon la présente invention, sachant que le palier selon la présente invention peut venir en lieu et place de tout palier de l'art antérieur.

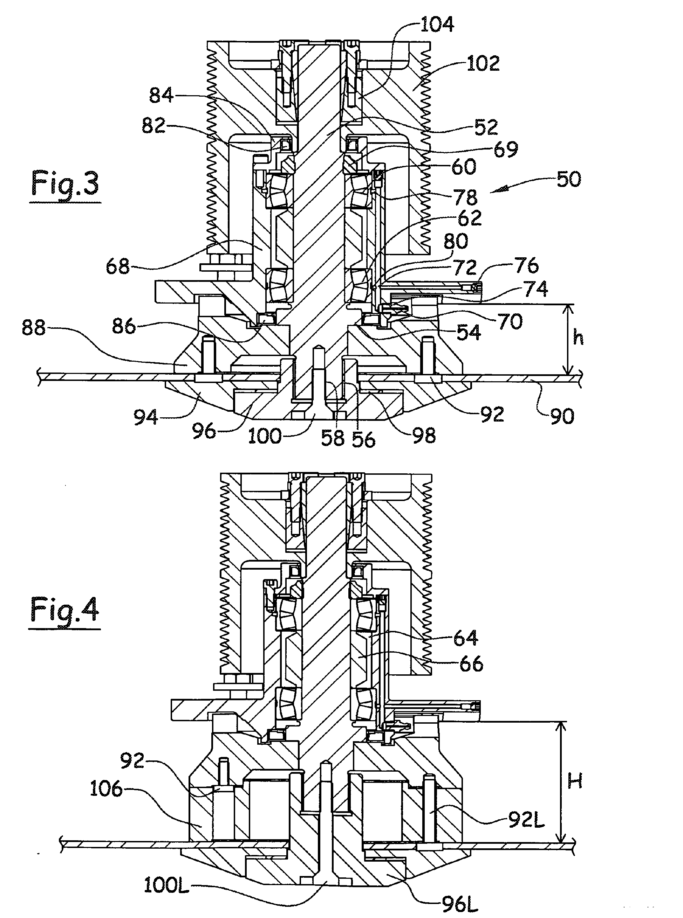

Sur la figure 3, on a représenté un palier 50 qui comprend un arbre 52 d'une longueur donnée, unique.

Cet arbre comprend un épaulement 54, ainsi qu'un filetage 56 extérieur à son extrémité inférieure et un trou 58 axial taraudé, de faible profondeur.

L'arbre présente deux méplats à son extrémité pour assurer une solidarisation en rotation des éléments emboîtés coaxialement ainsi que décrit ci-après.

Il est également prévu un ensemble de deux roulements 60 et 62, délimitant une chambre 64, les deux roulements étant séparés par une entretoise 66. Ces roulements sont de type à rouleaux, inclinés pour la reprise des efforts axiaux et radiaux.

La cage extérieure des roulements est insérée en force dans un boîtier 68 destiné à être rapporté sur le caisson du lamier. Le serrage de ces roulements sur l'arbre s'effectue avec un écrou 69 auto freiné.

Ce boîtier 68 intègre une alimentation 70 en lubrifiant. Cette alimentation comprend une entrée 72 avec une tête 74 de graissage à bille et une sortie 76 de trop plein du type gicleur.

Cette alimentation comprend deux piquages 78 et 80 débouchant sur une gorge annulaire, au droit des roulements, ces roulements disposant dans la cage extérieure d'ajutages de passage de graisse.

La distribution de graisse est ainsi optimisée et répartie, sans possibilité d'introduction de particules extérieures et sans nécessiter une quelconque intervention de l'utilisateur ou de la personne en charge de la maintenance.

Un joint 82 à lèvre et un couvercle 84 fixé sur le boîtier assurent l'étanchéité supérieure tandis qu'un joint 86 à lèvre assure l'étanchéité inférieure, au droit de l'épaulement 54 de l'arbre.

Un contre flasque 88 est monté de façon coaxiale par rapport à l'arbre 52 et est entraîné en rotation par des méplats de hauteur importante.

Le disque 90 de coupe est positionné contre le contre flasque et des pions 92 assurent le positionnement juste du disque et l'anti-rotation. Ces pions sont avantageusement des têtes de vis.

Un flasque 94 se place en vis-à-vis du contre flasque. On note que le diamètre du flasque est légèrement supérieur à celui du contre flasque de façon que, en cas de cisaillement périphérique du disque, la partie annulaire ainsi découpée ne puisse pas être éjectée hors du palier.

Le contre flasque, le disque et le flasque sont serrés par un écrou 96 de serrage qui se visse directement sur le filetage 56 extérieur de l'arbre 52.

Une rondelle 98 en matériau à faible coefficient de frottement est interposée entre le flasque 94 et l'écrou 96 de serrage de façon à permettre un démontage même après fonctionnement et oxydation partielle éventuelle.

Cette rondelle est annulaire mais centrée non pas sur l'extérieur comme dans l'art antérieur mais sur le fût de l'écrou de serrage.

Une vis 100 de sécurité traverse ledit écrou 96 de serrage et coopère avec le trou 58 axial taraudé de l'arbre.

Avantageusement le filetage est à pas inversé de façon à éviter tout desserrage durant le fonctionnement.

Cette vis est avantageusement à tête hexagonale fraisée pour un meilleur serrage pour une facilité de manoeuvre même par un utilisateur peu outillé.

Sa surface de contact sur l'écrou 96 est conique pour un meilleur serrage.

L'arbre 52 est lisse à son extrémité supérieure et reçoit une poulie 102. Cette poulie est rapportée sur l'arbre et immobilisée en rotation par une bride 104 à serrage conique. Ce montage assure une répartition des efforts sur toute la surface de l'arbre et donc une grande efficacité sans dégradation de la qualité du montage par usure, sans jeu comme dans le cas des immobilisations à clavette de l'art antérieur.

L'usinage claveté de l'arbre est également supprimé.

Cet agencement de palier selon la présente invention permet de répondre aux défauts présentés par les paliers de l'art antérieur et énumérés en préambule.

Sur la figure 4, on a représenté un palier avec un arbre 52 identique ainsi que tous les éléments principaux.

Sur cette figure 4, on note comme seule différence la présence d'une entretoise 106, des pions 92L allongés, un écrou 96L de serrage à fût allongé et une vis 100L de sécurité d'une plus grande longueur.

Ces allongements des pions, du fût de l'écrou comme de la vis de sécurité sont égaux à l'épaisseur de l'entretoise 106.

Les pions 92L qui sont des vis dont les têtes forment pions, servent également à la fixation de l'entretoise sur le contre flasque 88.

On constate alors que le montage est strictement identique au précédent mais qu'il conduit à un décalage en hauteur. On obtient ainsi les écarts h et H pour le montage de disques décalés dans un lamier. L'entraînement de ce contre flasque est assuré par le pion 92.

On comprend dès lors qu'un palier court tel que celui de la figure 3 est transformé très rapidement et avec un outillage réduit en un palier long tel que celui de la figure 4, moyennant un nombre extrêmement réduit de pièces et des interventions très simples et inversement.

De plus, on constate que les pièces nécessaires pour la transformation sont d'une grande simplicité et peuvent donc être tenues en stock.

Le palier du caisson de lamier selon l'invention est extrêmement sécuritaire car il interdit le montage si les différents éléments ne sont pas parfaitement emboîtés. De même, en cas de serrage imparfait, le desserrage intempestif est rendu difficile par les filetages inversés.

Toute rupture annulaire accidentelle d'un disque ne provoque pas un échappement de cette partie annulaire découpée hors du lamier avec les risques que cela représente.

La durée de vie est améliorée par rapport à l'art antérieur par une meilleure lubrification des roulements.

L'entretien est simplifié pour l'utilisateur sans lui faire courir de risques et sans en faire courir aux autres personnes dans l'environnement immédiat en cas de mauvaise prestation de maintenance.

## Revendications

1. Caisson de lamier supportant une motorisation et au moins deux disques (90) de coupe décalés en hauteur montés chacun sur un palier (50) équipé d'un contre flasque (88) et d'un flasque (94) serrés par un écrou (96) de serrage sur un arbre (52), **caractérisé en ce que** les paliers (50) des disques (90) de coupe comprennent des arbres (52) d'entraînement de longueur unique et **en ce qu'**une entretoise (106) est interposée entre au moins un disque (90) plus éloigné du caisson et le contre flasque (88).

2. Caisson de lamier selon la revendication 1, **caractérisé en ce que** l'écrou (96) de serrage d'au moins un disque (90), plus éloigné du caisson et monté avec une entretoise (106) interposée, comporte un fût long.

3. Caisson de lamier selon la revendication 1 ou 2, **caractérisé en ce que** l'arbre (52) d'entraînement comprend deux méplats prévus pour coopérer avec le contre flasque (88).

4. Caisson de lamier selon l'une quelconque des revendications précédentes, **caractérisé en ce que** l'entretoise (106) est solidarisée au contre flasque (88) par des vis (92,92L), ces vis participant également à l'entraînement du disque (90).

5. Caisson de lamier selon l'une quelconque des revendications précédentes, **caractérisé en ce que** chaque palier (50) comprend un boîtier (68) destiné a être rapporté sur le caisson du lamier et recevant la cage extérieure de deux roulements (60,62), chacune insérée en force et serrée par un écrou (69) auto freiné.

6. Caisson de lamier selon la revendication 5, **caractérisé en ce que** le boîtier (68) intègre une alimentation (70) en lubrifiant comprenant une entrée (72) équipée d'une tête (74) de graissage à bille et d'une sortie (76) de trop plein, ainsi que deux piquages (78, 80), débouchant sur une gorge annulaire, au droit des roulements (60,62).

7. Caisson de lamier selon l'une quelconque des revendications précédentes, **caractérisé en ce que** le flasque (94) est d'un diamètre supérieur à celui du contre flasque (88).

8. Caisson de lamier selon l'une quelconque des revendications précédentes, **caractérisé en ce que** l'arbre (52) d'entraînement est lisse à son extrémité supérieure, destinée à recevoir une poulie (102) d'entraînement immobilisée par une bride (104) à serrage conique.

9. Caisson de lamier selon l'une quelconque des revendications précédentes, **caractérisé en ce que** l'arbre (52) d'entraînement comprend un trou (58) axial taraudé destiné à recevoir une vis (100) de sécurité.

10. Caisson de lamier selon la revendication 9, **caractérisé en ce que** la vis (100) a un pas inversé, une tête hexagonale fraisée pour une surface de contact conique sur l'écrou (96).

## Claims

1. A trimmer casing supporting a drive and at least two cutting discs (90) offset in height, each mounted on a bearing (50) equipped with a backplate (88) and a plate (94) clamped by a clamping nut (96) on a shaft (52), **characterised in that** the bearing units (50) of the cutting discs (90) comprise drive shafts (52) of unique length and **in that** a spacer (106) is interposed between at least one disc (90) furthest from the casing and the backplate (88).

2. A trimmer casing according to claim 1, **characterised in that** the clamping nut (96) of at least one disc (90), furthest away from the casing and mounted with a spacer (106) interposed, has a long barrel.

3. A trimmer casing according to claim 1 or 2, **characterised in that** the drive shaft (52) comprises two flats designed to cooperate with the backplate (BB).

4. A trimmer casing according to any one of the receding claims, **characterised in that** the spacer (106) is secured to the backplate (88) by screws (92, 92L), these screws also participating in the driving of the disc (90).

5. A trimmer casing according to any one of the preceding claims, **characterised in that** each bearing unit (50) comprises a housing (68) intended to be attached to the casing of the trimmer and receiving the external cage of two bearings (60, 62), each forcibly inserted and clamped by a self-locking nut (69).

6. A trimmer casing according to claim 5, **characterised in that** the housing (68) includes a lubricant supply (70) comprising an inlet (72) equipped with a ball-type lubricating head (74) and an overflow outlet (76), as well as two tappings (78, 80), emerging onto an annular groove, in line with the bearings (60, 62).

7. A trimmer casing according to any one of the preceding claims, **characterised in that** the plate (94) has a diameter greater than that of the backplate (88).

8. A trimmer casing according to any one of the preceding claims, **characterised in that** the drive shaft (52) is smooth at its top end, intended to receive a drive pulley (102) immobilised by a conical clamping flange (104).

9. A trimmer casing according to any one of the preceding claims, **characterised in that** the drive shaft (52) comprises a threaded axial hole (58) intended to receive a safety screw (100).

10. A trimmer casing according to claim 9, **characterised in that** the screw (100) has a reverse thread, a hexagonal head milled for a conical contact surface on the nut (96).

## Patentansprüche

1. Gehäuse eines Schneidbalkens, das einen Antrieb und wenigstens zwei höhenversetzte Schneidscheiben (90) trägt, die jeweils an einem Lager (50) angebracht sind, das mit einem Gegenflansch (88) und einem Flansch (94) ausgestattet ist, die durch eine Spannmutter (96) an einer Welle (52) festgelegt sind, **dadurch gekennzeichnet, dass** Lager (50) der Schneidscheiben (90) Antriebswellen (52) mit gleicher Länge umfassen und dass zwischen wenigstens einer von dem Gehäuse weiter entfernten Scheibe (90) und dem Gegenflansch (88) ein Steg (106) eingefügt ist.

2. Gehäuse eines Schneidbalkens nach Anspruch 1, **dadurch gekennzeichnet, dass** die Spannmutter (96) wenigstens einer Scheibe (90), die von dem Gehäuse weiter entfernt ist und mit einem eingefügten Steg (106) angebracht ist, einen langen Schaft aufweist.

3. Gehäuse eines Schneidbalkens nach Anspruch 1 oder 2, **dadurch gekennzeichnet, dass** die Antriebswelle (52) zwei Abflachungen umfasst, die vorgesehen sind, um mit dem Gegenflansch (88) zusammen zu wirken.

4. Gehäuse eines Schneidbalkens nach einem der vorstehenden Ansprüche, **dadurch gekennzeichnet, dass** der Steg (106) durch Schrauben (92, 92L) mit dem Gegenflansch (88) fest verbunden ist, wobei diese Schrauben ebenfalls am Antrieb der Scheibe (90) beteiligt sind.

5. Gehäuse eines Schneidbalkens nach einem der vorstehenden Ansprüche, **dadurch gekennzeichnet, dass** jedes Lager (50) ein Gehäuse (68) umfasst, das dazu bestimmt ist, an dem Gehäuse des Schneidbalkens befestigt zu werden, und das den Außenkäfig von zwei Kugellagern (60, 62) aufnimmt, der jeweils hineingedrückt und durch eine selbstsichernde Mutter (69) festgelegt ist.

6. Gehäuse eines Schneidbalkens nach Anspruch 5, **dadurch gekennzeichnet, dass** das Gehäuse (68) eine Schmiermittelversorgung (70) enthält, die einen Einlass (72), der mit einem Kugelschmierkopf (74) und mit einem Überlaufauslass (76) ausgestattet ist, sowie zwei an einer Ringnut ausmündende Abzweigungen (78, 80) gegenüber den Kugellagern (60, 62) umfasst.

7. Gehäuse eines Schneidbalkens nach einem der vorstehenden Ansprüche, **dadurch gekennzeichnet, dass** der Flansch (94) einen größeren Durchmesser als der Gegenflansch (88) aufweist.

8. Gehäuse eines Schneidbalkens nach einem der vorstehenden Ansprüche, **dadurch gekennzeichnet, dass** die Antriebswelle (52) an ihrem oberen Ende, das dazu bestimmt ist, eine Antriebsscheibe (102) aufzunehmen, die durch eine Schelle (104) mit konischer klemmung festgelegt ist, glatt ist.

9. Gehäuse eines Schneidbalkens nach einem der vorstehenden Ansprüche, **dadurch gekennzeichnet, dass** die Antriebswelle (52) eine axiale Gewindebohrung (58) umfasst, die dazu bestimmt ist, eine Sicherungsschraube (100) aufzunehmen.

10. Gehäuse eines Schneidbalkens nach Anspruch 9, **dadurch gekennzeichnet, dass** die Schraube (100) eine umgekehrte Gewindesteigung, einen Sechskant-Senkkopf für eine konische Kontaktfläche an der Mutter (96) aufweist.
